# EUROPÄISCHE PATENTSCHRIFT

(11) **EP 3 349 939 B1**
(45) Veröffentlichungstag und Bekanntmachung des Hinweises auf die Patenterteilung: **20.11.2019**
(21) Anmeldenummer: 16750686.4
(22) Anmeldetag: 28.07.2016
(51) Int. Cl.: B23K 26/08, B23K 26/142, B23K 26/16, B23K 26/38, B23K 37/04, B23K 26/70, B23K 26/02, B26D 1/60

(54) **VORRICHTUNG ZUM SCHNEIDEN VON BLECHPLATINEN AUS EINEM BLECHBAND**
DEVICE FOR CUTTING SHEET METAL PLATES OUT OF A SHEET METAL STRIP
DISPOSITIF DE COUPE DE FLANS DE TÔLE DANS UNE BANDE DE TÔLE

(30) Priorität: 15.09.2015 DE 102015217639; 28.09.2015 DE 102015218649
(43) Veröffentlichungstag der Anmeldung: 25.07.2018
(73) Patentinhaber: Schuler Pressen GmbH, 91093 Heßdorf (DE)
(72) Erfinder: SUMMERER, Matthias, 90518 Altdorf (DE); SEITZ, Alexander, 91054 Erlangen (DE)
(74) Vertreter: Dr. Gassner & Partner mbB
(86) Internationale Anmeldenummer: PCT/EP2016/068085
(87) Internationale Veröffentlichungsnummer: WO 2017/045821

(56) Entgegenhaltungen:
- EP-A1- 1 586 407
- WO-A1-95/15837
- WO-A2-2007/028576
- US-A- 4 993 296

## Beschreibung

Die Erfindung betrifft eine Vorrichtung zum Schneiden von Blechplatinen aus einem Blechband nach dem Oberbegriff des Anspruchs 1.

Eine solche Vorrichtung ist aus der WO 95/15837 A1 bekannt.

Eine weitere Vorrichtung ist aus der DE 10 2004 034 256 A1 bekannt. Bei einer aus der EP 1 586 407 A1 bekannten Vorrichtung ist in einer von einer Laserschneidvorrichtung weg weisenden Abführrichtung ein Staubabführschacht vorgesehen, an dem ein Staubauffangbehälter befestigt ist. Der Staubabführschacht und der daran angebrachte Staubauffangbehälter werden zum Abführen und Auffangen von beim Laserschneiden von Blech anfallendem Schneidstaub mitlaufend mit der Laserschneidvorrichtung bewegt. - Bei der bekannten Vorrichtung ist nachteilig, dass Schneidstaub an einer der Abführrichtung zugewandten Unterseite eines aus dem Blechband geschnittenen Blechs anhaftet oder damit verschweißt. Der Schneidstaub muss nachfolgend vom Blech entfernt werden. Das ist aufwändig.

Die DE 10 2011 051 170 A1 offenbart eine Werkstückauflage für eine Bearbeitungsmaschine. Bei der Werkstückauflage werden in und entgegen der Transportrichtung bewegbare Auflageflächen durch Werkstückauflageketten gebildet. Zwischen den Auflageflächen ist ein Spalt vorgesehen, in welchem eine Strahlauffangvorrichtung in y-Richtung hin- und herbewegbar ist. Eine der Blechplatine zugewandte Oberseite der Strahlauffangvorrichtung dient zum Abstützen des Werkstücks. Um eine unerwünschte Bewegung des Werkstücks relativ zur Laserschneidvorrichtung zu vermeiden, ist vorgesehen, dass die Werkstückauflagekette aus Kunststoff besteht oder mit Kunststoff beschichtet ist. Alternativ oder zusätzlich können die Kettenglieder der Werkstückauflagekette mit Kugelauflagen bestückt sein.

Aufgabe der Erfindung ist es, die Nachteile nach dem Stand der Technik zu beseitigen. Es soll insbesondere eine einfach herstellbare Vorrichtung angegeben werden, mit der Bleche ohne wesentliche Anhaftungen von Schneidstaub herstellbar sind.

Diese Aufgabe wird durch die Merkmale des Anspruchs 1 gelöst. Zweckmäßige Ausgestaltungen der Erfindung ergeben sich aus den Merkmalen der abhängigen Ansprüche.

Nach Maßgabe der Erfindung wird vorgeschlagen, dass im Spalt eine in y-Richtung mitlaufend in Ausrichtung auf den Laserstrahl hin und her bewegbare Blende vorgesehen ist.

Im Sinne der vorliegenden Erfindung wird unter dem Begriff "Blende" ein langgestrecktes Element verstanden, welches den Spalt sowohl in y-Richtung als auch in der Transportrichtung abdeckt. Im langgetreckten Element ist ein Durchbruch vorgesehen, welcher in, vorzugsweise zentraler, Ausrichtung mit dem Laserstrahl in y-Richtung hin und her bewegbar ist. Statt einem langgestreckten Element können auch zwei langgestreckte Elemente vorgesehen sein, zwischen deren einander gegenüberliegende Enden eine Öffnung bzw. der "Durchbruch" gebildet ist, welche in y-Richtung in Ausrichtung mit dem Laserstrahl hin und her bewegbar ist.

Durch das Vorsehen der im Spalt in y-Richtung hin und her bewegbaren Blende wird vermieden, dass Schneidstaub entgegen der Strömungsrichtung eines aus einer Schneiddüse austretenden Schneidgases in y-Richtung seitlich des Laserstrahls aus dem Spalt gegen die Unterseite des Blechbands geschleudert wird und dort anhaftet.

Die Blende ist zweckmäßigerweise aus schwenkbeweglich miteinander verbundenen Metallgliedern gebildet, von denen ein erstes Metallglied einen Durchbruch zum Durchtritt des Laserstrahls aufweist und zweite Metallglieder eine Abdeckung aufweisen. Eine Schwenkachse der miteinander verbundenen Metallglieder verläuft dabei etwa in Transportrichtung. Beispielsweise kann die Blende nach Art einer Fahrradkette ausgebildet sein, welche zum Hin- und Herbewegen an beiden Enden des Spalts jeweils über ein Ritzel geführt ist. Eines der Kettenglieder kann zum Durchtritt des Laserstrahls vorgesehen sein, wohingegen die anderen Kettenglieder mit der Abdeckung versehen sein können, welche einem Durchtritt von Schneidstaub in Richtung der Unterseite des Blechbands entgegenwirkt.

Es ist auch möglich, dass die Blende aus einem Zahnriemen oder einem Edelstahlband gebildet ist, welche mit einem Durchbruch zum Durchtritt des Laserstrahls versehen sind. Der Zahnriemen kann im Bereich des Durchbruchs einen Metalleinsatz aufweisen.

Nach einer weiteren Ausgestaltung ist eine Antriebseinrichtung vorgesehen, mit welcher die Blende hin und her bewegbar ist. Die Antriebseinrichtung kann zumindest ein angetriebenes Ritzel, eine angetriebene Rolle oder dgl. umfassen. Ferner kann zum Antrieb des Ritzels, der Rolle oder dgl. ein Elektromotor, insbesondere ein Servomotor, vorgesehen sein, welcher in Abhängigkeit einer Position der Laserschneidvorrichtung in y-Richtung so steuerbar ist, dass der Durchbruch der Blende stets mitlaufend in Ausrichtung auf den Laserstrahl hin und her bewegt wird.

Nach einer weiteren Ausgestaltung ist am ersten Ende des ersten Förderbands ein erstes Stützmittel mit einer ersten Stützleiste und am zweiten Ende ein zweites Stützmittel mit einer der ersten Stützleiste gegenüberliegenden zweiten Stützleiste vorgesehen, so dass der Spalt zwischen der ersten und der zweiten Stützleiste gebildet ist. Die erste und die zweite Stützleiste stützen das Blechband im Schneidbereich ab. Durch das Vorsehen der ersten und der zweiten Stützleiste wird eine Beschädigung des Förderbands durch den Laserstrahl vermieden. Abgesehen davon liegen die Stützflächen der Stützleisten in einer Ebene, auf welcher das Blechband im Schneidbereich horizontal abgestützt wird. Das ermöglicht eine besonders exakte Herstellung eines Schnitts entlang eines vorgegebenen Schneidwegs.

Eine erste Bewegungsebene wird durch eine der Blechplatine zugewandte Oberseite des ersten und/oder zweiten Förderbands gebildet. Auch der Laserschneidvorrichtung zugewandte Schutzflächen liegen vorteilhafterweise in der ersten Bewegungsebene. Die erste Bewegungsebene ist oberhalb einer zweiten Bewegungsebene der Blende in y-Richtung angeordnet, welche durch eine der Laserschneidvorrichtung zugewandte zweite Blendenoberseite der Blende gebildet ist.

Nach einer weiteren Ausgestaltung bildet eine der Laserschneidvorrichtung zugewandte Stützfläche der Stützleisten eine erste Bewegungsebene in Transportrichtung. Die erste Bewegungsebene ist oberhalb einer zweiten Bewegungsebene der Blende in y-Richtung angeordnet, welche durch eine der Laserschneidvorrichtung zugewandte zweite Blendenoberseite der Blende gebildet ist. D. h. die zweite Bewegungsebene der Blende ist so angeordnet, dass die Blende beim Hin- und Herbewegen in y-Richtung nicht mit der Unterseite des Blechbands in Kontakt ist. Damit kann eine unerwünschte Bewegung einer nahezu vollständig aus dem Blechband ausgeschnittenen Blechplatine in y-Richtung vermieden werden. Das trägt wiederum zu einer besonders exakten Schnittführung entlang des vorgegebenen Schneidwegs bei.

Nach einer weiteren Ausgestaltung ist ein sich von zumindest einer der Stützleisten in eine von der Laserschneidvorrichtung weg weisende Abführrichtung erstreckender Staubabführschacht vorgesehen. Der Staubabführschacht trägt weiter dazu bei, dass durch die Blende abgeführter Schneidstaub nicht an die Unterseite des Blechbands gelangt.

Vorteilhafterweise ist die zumindest eine Stützleiste und/oder der Staubabführschacht mit einer Belüftungseinrichtung zur Belüftung des Spalts versehen.

Durch das Vorsehen einer Belüftungseinrichtung kann eine sich beim Abführen des Schneidstaubs durch den Abführschacht ausbildende Rückströmung in Richtung der Unterseite des geschnittenen Blechs auf einfache Weise vermieden werden. Der Schneidstaub wird im Wesentlichen vollständig durch den Abführschacht in Abführrichtung abgeführt. Es ist nicht erforderlich, Schneidstaub bzw. Staub von der Unterseite des geschnittenen Blechs zu entfernen.

Nach einer vorteilhaften Ausgestaltung umfasst die Belüftungseinrichtung Belüftungskanäle, welche in einer der Laserschneideinrichtung zugewandten Stützfläche der Stützleiste vorgesehen sind. Die vorgeschlagene Ausgestaltung lässt sich besonders einfach und kostengünstig herstellen.

Vorteilhafterweise erstrecken sich die Belüftungskanäle über eine sich in Transportrichtung erstreckende Länge der Stützfläche. Die Belüftungskanäle können insbesondere parallel und/oder schräg zur Transportrichtung verlaufen. Sie können einen gebogenen oder abgewinkelten Verlauf aufweisen.

Die Belüftungseinrichtung kann auch Belüftungsdurchbrüche umfassen, welche zumindest eine der Stützleisten und/oder den Staubabführschacht durchgreifen. Auch solche Belüftungsdurchbrüche, z. B. Bohrungen oder Schlitze, ermöglichen eine zusätzliche Belüftung unterhalb einer Unterseite des Blechbands und eines daraus geschnittenen Blechs, derart, dass sich eine unerwünschte Rückströmung des beim Schneiden des Blechbands gebildeten Schneidstaubs nicht ausbildet.

Die erfindungsgemäße Belüftung zumindest einer Stützleiste und/oder des Abführschachts kann "passiv" oder "aktiv" erfolgen. Bei der passiven Belüftung wird Luft durch die Belüftungseinrichtung angesaugt. Das Ansaugen der Luft erfolgt durch einen Venturi-Effekt, der sich infolge der in Abführrichtung gerichteten, durch das Schneidgas bedingten Schneidgasströmung ausbildet. - Bei der "aktiven" Belüftung wird Luft durch die Belüftungseinrichtung in Richtung des Abführschachts geblasen. Es bildet sich in diesem Fall eine höhere Strömungsgeschwindigkeit aus. Die Strömungsgeschwindigkeit kann in diesem Fall auch gesteuert oder geregelt werden. - Zur aktiven Belüftung kann insbesondere ein Gebläse zum Zuführen von Luft zu den Belüftungskanälen und/oder Belüftungsdurchbrüchen vorgesehen sein. Das Gebläse kann auch ein Sauggebläse sein, welches stromabwärts des Staubabführschachts vorgesehen ist und eine Saugströmung durch die Blende erzeugt.

Nach einer weiteren Ausgestaltung der Erfindung weist der Staubabführschacht einen sich in der Abführrichtung erweiternden Querschnitt auf. Auch das wirkt der Ausbildung einer unerwünschten Rückströmung von Schneidstaub in Richtung der Unterseite des Blechs entgegen.

Die Stützleisten und/oder der Staubabführschacht und/oder die Blende sind zweckmäßigerweise aus Kupfer oder einer im Wesentlichen Kupfer enthaltenden Legierung hergestellt. Es hat sich gezeigt, dass die Anhaftung von Schneidstaub an Kupferwerkstoffen besonders gering ist. Die Belüftungskanäle und/oder Belüftungsdurchbrüche und/oder die Blende setzen in diesem Fall auch bei langen Standzeiten nicht mit Schneidstaub zu. Es kann damit stets eine ordnungsgemäße Belüftung gewährleistet werden.

Der Staubabführschacht kann mit einem Behälter zum Auffangen von Schneidstaub verbunden sein.

Der Staubabführschacht und die Blende können lediglich an einer der beiden Stützleisten angebracht sein. In diesem Fall kann der Staubabführschacht auf einfache Weise mitlaufend mit dem Schlitz bewegt werden.

Der Staubabführschacht ist vorteilhafterweise durch zwei sich in Abführrichtung ersteckende Wände gebildet. Die Wände erstrecken sich z. B. im Wesentlichen in eine Richtung senkrecht zur Transportrichtung. Zumindest eine, vorzugsweise beide, Wände kann/können an einer der Stützleisten angebracht sein. In den seitlichen Randbereichen des Staubabführkanals können mit dem Gebläse verbundene Durchbrüche zur Ausbildung eines Luftschwerts vorgesehen sein. Damit kann vermieden werden, dass Schneidstaub in den Randbereichen des Blechbands auf eine Oberseite desselben bzw. auf die Oberseite daraus geschnittener Bleche gelangt. Statt des Luftschwerts können auch Seitenwände vorgesehen sein, welche etwa in Transportrichtung verlaufen und an zumindest einer der beiden einander gegenüberliegenden Wände angebracht sind.

Bei der erfindungsgemäßen Vorrichtung ist vorteilhafterweise dem ersten Stützmittel stromaufwärts ein erstes Fördermittel vorgeordnet ist. Ferner kann dem zweiten Stützmittel stromabwärts ein zweites Fördermittel nachgeordnet sein. Das ermöglicht einen Transport, insbesondere einen kontinuierlichen Transport, des Blechbands über den zwischen den Stützleisten gebildet Schlitz. Das erste Fördermittel kann z. B. eine Walzenrichtmaschine umfassen. Das erste und/oder das zweite Fördermittel können/kann auch ein Förderband und/oder einen Rollenförderer umfassen.

Nachfolgend wird die Erfindung anhand der Zeichnungen näher erläutert. Es zeigen:
- Fig. 1: eine perspektivische Teilansicht einer ersten Vorrichtung,
- Fig. 2: eine perspektivische Teilansicht einer zweiten Vorrichtung,
- Fig. 3: eine perspektivische Teilansicht einer dritten Vorrichtung,
- Fig. 4: eine Schnittansicht durch eine vierte Vorrichtung,
- Fig. 5a: eine perspektivische Teilansicht einer fünften Vorrichtung,
- Fig. 5b: eine Detailansicht gemäß Fig. 5a,
- Fig. 6: eine schematische Querschnittsansicht durch eine sechste Vorrichtung,
- Fig. 7: eine schematische Querschnittsansicht durch eine siebte Vorrichtung,
- Fig. 8: eine schematische Schnittansicht durch eine Blende und
- Fig. 9: eine schematische Teilschnittansicht durch eine weitere Blende.

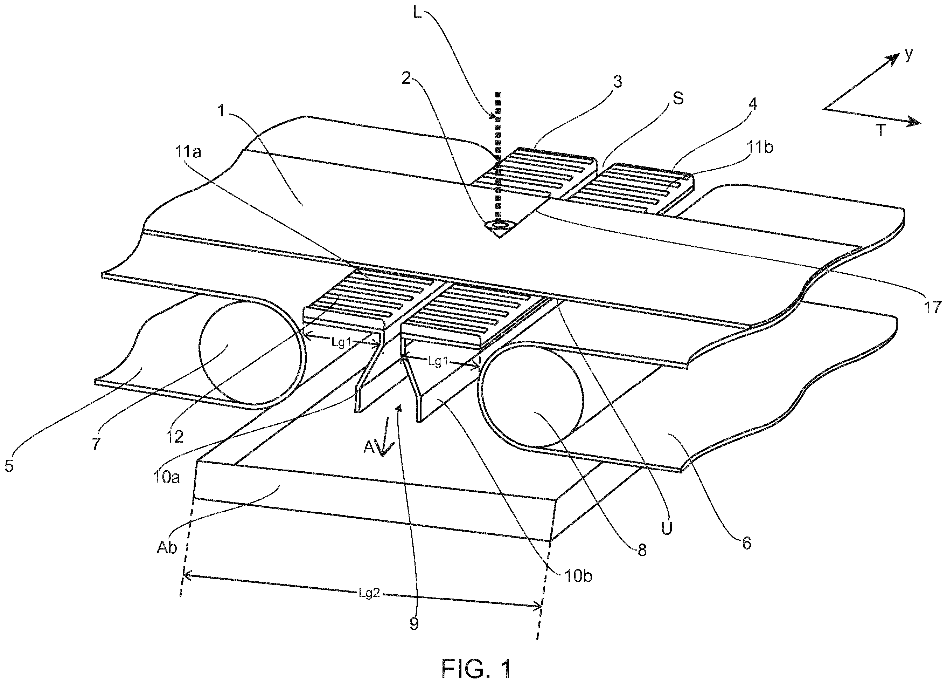

In den Fig. 1 bis 5b sind Vorrichtungen gezeigt, bei denen der Übersichtlichkeit halber die in y-Richtung die hin und her bewegbare Blende weggelassen worden ist.

Bei der in Fig. 1 gezeigten ersten Vorrichtung zum Schneiden von Blechplatinen aus einem Blechband 1 ist eine Transportrichtung des Blechbands 1 mit dem Bezugszeichen T bezeichnet. Mit dem Bezugszeichen 2 ist eine Schneiddüse einer hier nicht näher gezeigten Laserschneidvorrichtung bezeichnet. Die Schneiddüse 2 ist mittels einer herkömmlichen Bewegungsvorrichtung in Transportrichtung T und in eine dazu senkrechte y-Richtung bewegbar, so dass aus dem Blechband 1 Bleche mit einer vorgegebenen Kontur ausschneidbar sind. Dabei kann das Blechband 1 kontinuierlich in Transportrichtung T bewegt werden.

Die Schneiddüse 2 ist so ausgebildet, dass dadurch Schneidgas und ein Laserstrahl L auf das Blechband 1 geführt werden können. Das Blechband 1 ist im Schneidbereich auf eine erste Stützleiste 3 und eine gegenüberliegend angeordnete zweite Stützleiste 4 abgestützt. Die erste 3 und die zweite Stützleiste 4 erstrecken sich etwa in der y-Richtung. Zwischen den Stützleisten 3, 4 ist ein Spalt S gebildet, durch den ein Laserstrahl L hindurch läuft. Die erste 3 und die zweite Stützleiste 4 sind mittels einer hier nicht näher gezeigten herkömmlichen Vorrichtung mitlaufend mit der Schneiddüse 2 bewegbar. Zu diesem Zweck kann die erste Stützleiste 3 mit einem ihr stromaufwärts vorgeordneten ersten Fördermittel, z. B. einem ersten Bandförderer 5, verbunden sein. In ähnlicher Weise kann die zweite Stützleiste 4 mit einem ihr stromabwärts nachgeordneten zweiten Fördermittel, z. B. einem zweiten Bandförderer 6, verbunden sein. Einander gegenüberliegende erste 7 und zweite Umlenkrollen 8 der Bandförderer 5, 6 können in herkömmlicher Weise unter Ausbildung des Spalts S mitlaufend mit der Schneiddüse 2 der Laserschneidvorrichtung bewegbar sein. Es wird dazu beispielhaft auf die DE 10 2004 034 256 A1 verwiesen.

Mit dem Bezugszeichen 9 ist allgemein ein Abführschacht bezeichnet, welcher sich in eine von einer Unterseite U des Blechbands 1 wegweisende Abführrichtung A erstreckt. Der Abführschacht 9 ist hier durch zwei sich in die Abführrichtung A ersteckende Wände 10a, 10b gebildet.

Die erste Wand 10a ist an der ersten Stützleiste 3 und die zweite Wand 10b an der zweiten Stützleiste 4 angebracht. Die Wände 10a, 10b erstrecken sich in der y-Richtung. Sie sind so ausgestaltet, dass eine Spaltweite des dazwischen gebildeten Spalts S sich in Abführrichtung A erweitert. Die Stützleisten 3, 4 können auch in einem Stück mit der jeweiligen Wand 10a, 10b gebildet sein.

Es ist auch möglich, dass beide Wände 10a, 10b über in Transportrichtung T sich erstreckende Verbindungswände (hier nicht gezeigt) miteinander verbunden sind. Derartige Verbindungswände sind zweckmäßigerweise in y-Richtung seitlich außerhalb eines Schneidbereichs vorgesehen. In diesem Fall kann der Abführschacht 9 mittels lediglich einer der beiden Wände 10a oder 10b an der dazu korrespondierenden Stützleiste 3 oder 4 angebracht sein.

Die erste 3 und die zweite Stützleiste 4 weisen jeweils eine der Schneiddüse 2 zugewandte Stützfläche 11a, 11b auf. Jede der Stützflächen 11a, 11b ist mit etwa sich in Transportrichtung T erstreckenden Belüftungskanälen 12 versehen. Die Belüftungskanäle 12 erstrecken sich hier über eine gesamte erste Länge Lg1 der Stützleisten 3, 4, so dass bei auf den Stützflächen 11a, 11b aufliegendem Blechband 1 durch die Belüftungskanäle 12 Luft dem Spalt S zugeführt werden kann.

Mit dem Bezugszeichen B ist ein Behälter bezeichnet, welcher dem Abführschacht 9 in der Abführrichtung A nachgeordnet ist. Der Behälter B ist hier nicht mit dem Abführschacht 9 verbunden, d. h. der Behälter B ist relativ zum Abführschacht 9 feststehend. Eine zweite Länge Lg2 des Behälters B erstreckt sich in Transportrichtung T zumindest über einen vorgegebenen Bewegungsbereich des mitlaufend bewegten Abführschachts 9. Bei feststehenden Behälter B können die mitlaufend zu bewegenden Massen gering gehalten werden. In diesem Fall kann der Spalt S besonders schnell und genau mit dem Laserstrahl L bewegt werden.

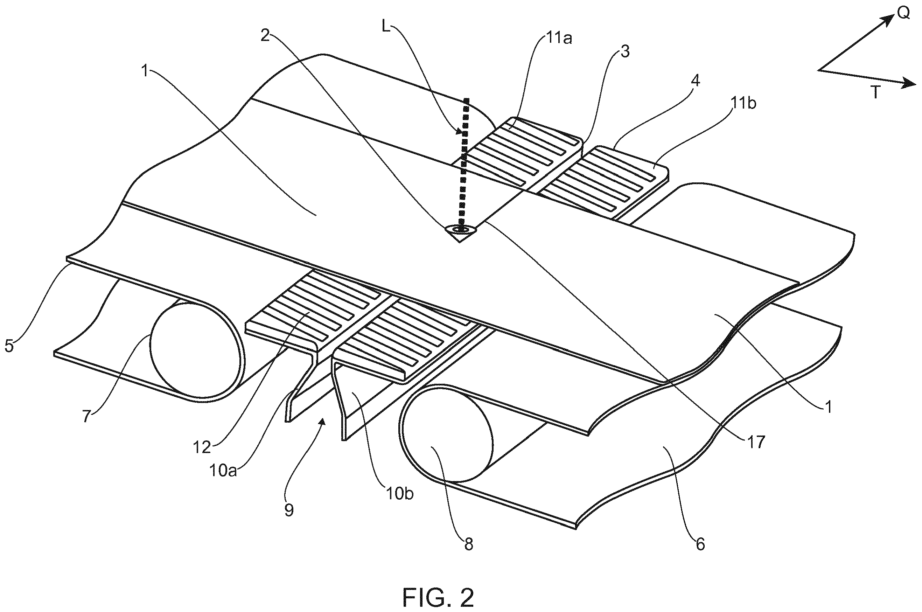

Bei der in Fig. 2 gezeigten zweiten Vorrichtung verlaufen die Belüftungskanäle 12 schräg zur Transportrichtung T. Sie erstecken sich über die gesamte erste Länge Lg1 der ersten 11a und der zweiten Stützfläche 11b der Stützleisten 3, 4.

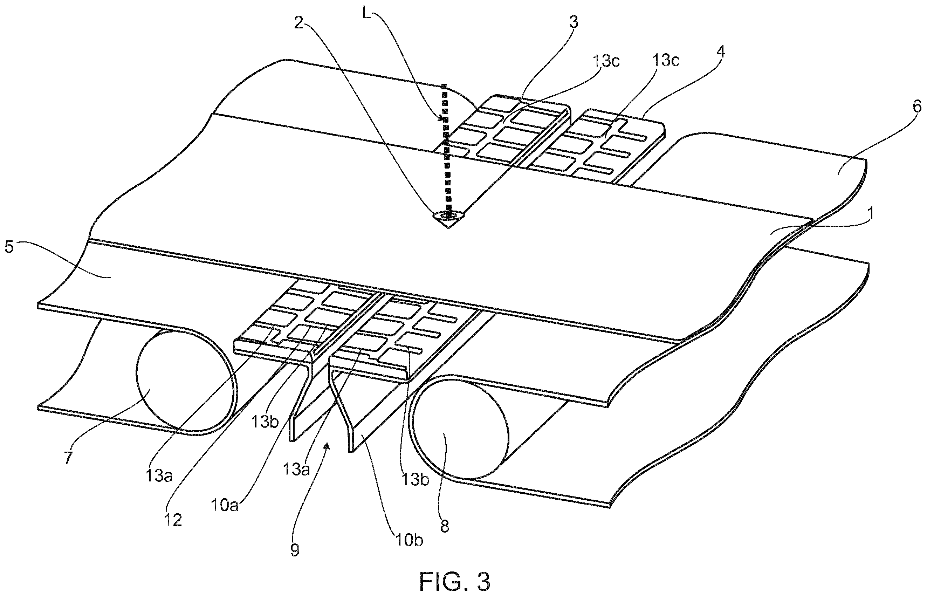

Bei der in Fig. 3 gezeigten dritten Vorrichtung sind die Belüftungskanäle 12 jeweils in zwei Abschnitte 13a, 13b gegliedert, die in Transportrichtung T versetzt zueinander angeordnet sind. Die Abschnitte 13a, 13b sind über einen etwa in y-Richtung verlaufenden Verbindungskanal 13c miteinander verbunden.

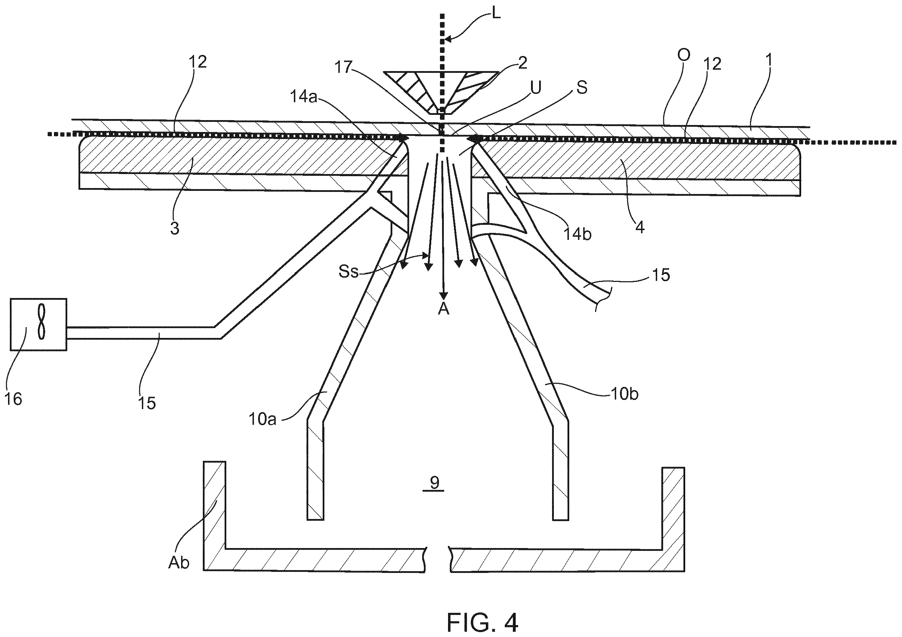

Bei der in Fig. 4 gezeigten vierten Vorrichtung ist die erste Stützleiste 3 mit einem ersten Belüftungsdurchbruch 14a und die zweite Stützleiste 4 mit einem zweiten Belüftungsdurchbruch 14b versehen.

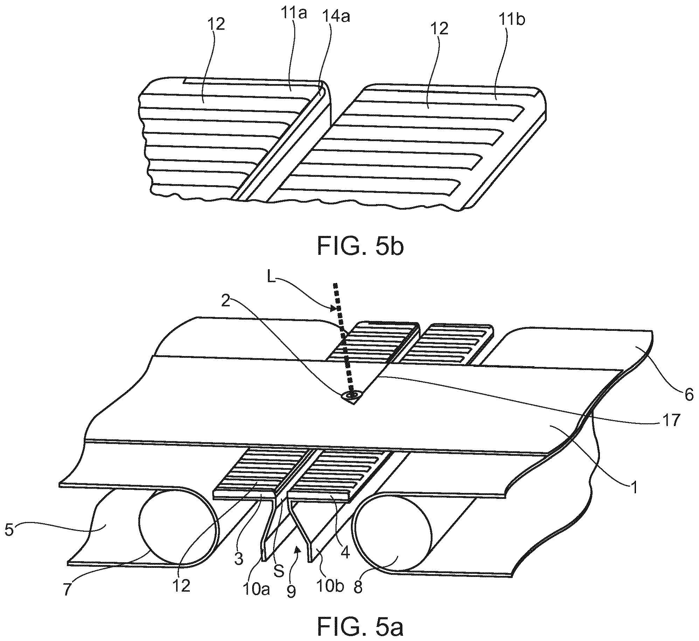

Bei der in Fig. 5a und 5b gezeigten fünften Vorrichtung weisen die Stützleisten 3, 4 Belüftungskanäle 12 - wie in Fig. 1 gezeigt - auf. Zusätzlich sind in einem Randbereich der Stützleisten 3, 4 Belüftungsdurchbrüche 14a, 14b vorgesehen.

Die Belüftungsdurchbrüche 14a, 14b können über hier lediglich schematisch angedeutete Leitungen 15 mit einem ebenfalls schematisch angedeuteten Gebläse 16 verbunden sein.

Die Funktion der Vorrichtung wird nunmehr anhand der Fig. 5a und 5b näher erläutert.

Aus der Schneiddüse 2 tritt beim Schneiden des Blechbands 1 Schneidgas aus. Es bildet sich eine Schneidgasströmung aus, die durch den einen Schnitt 17 im Blechband 1 in Richtung des Spalts S gerichtet ist. Mit dem in Abführrichtung A strömenden Schneidgas wird beim Schneiden gebildeter Schneidstaub Ss in den Abführschacht 9 abgeführt. Die Schneidgasströmung bewirkt einen Venturi-Effekt, durch den Luft durch die Belüftungskanäle 12 und/oder die Belüftungsdurchbrüche 14a, 14b angesaugt wird. Infolge dessen wird die Ausbildung einer in Richtung der Unterseite U des Blechbands 1 gerichteten Rückströmung vermieden. Schneidstaub Ss wird nicht gegen die Unterseite U transportiert.

Durch die Belüftungsdurchbrüche 14a, 14b kann mittels des Gebläses 16 über die Leitungen 15 auch Druckluft in den Schneidpalt S geblasen werden. Damit kann noch effektiver die Ausbildung einer Rückströmung gegen die Unterseite U vermieden werden. Ein Massefluss der insbesondere durch die Belüftungsdurchbrüche 14a, 14b zugeführten Luft kann z. B. in Abhängigkeit einer Spaltweite des Spalts S gesteuert werden. Dazu kann zumindest ein Steuerventil dem Gebläse 16 nachgeschaltet sein (hier nicht gezeigt).

Die Belüftungsdurchbrüche 14a, 14b können auch in y-Richtung seitlich außerhalb eines Schneidbereichs angeordnet sein. Damit kann in diesem Bereich mittels Durchluft ein Luftschwert erzeugt werden. Mit dem Luftschwert kann ein seitliches Austreten von Schneidstaub Ss und eine Verschmutzung einer der Unterseite U des Blechbands 1 gegenüberliegenden Oberseite O vermieden werden. Verbindungswände sind in diesem Fall nicht erforderlich.

Nach einer weiteren in den Figuren nicht gesondert dargestellten Ausgestaltung kann es auch sein, dass stromabwärts des Spalts S, insbesondere im Bereich der ersten 10a sowie der zweiten Wand 10b eine Kühlfalle vorgesehen ist. Die Kühlfalle kann beispielsweise gebildet sein durch eine Vielzahl von in der 10a und/oder der zweiten Wand 10b vorgesehene Düsen, durch welche Kaltluft, insbesondere trockene Kaltluft, oder kalter Stickstoff, welcher zweckmäßigerweise durch Verdampfung von Flüssigstickstoff hergestellt ist, eingeblasen wird. Die Kühlfalle kann selbstverständlich auch anders ausgestaltet sein. Beispielsweise können ein oder mehrere in y-Richtung verlaufende Leitungen im Bereich der Wände 10a, 10b oder des Abführschachts 9 vorgesehen sein, welche mit einem Kühlmittel durchströmt werden.

Indem der Schneidstaub Ss stromabwärts in oder durch eine Kühlfalle geführt wird, kühlen sich die Schneidstaubpartikel ab. Es hat sich gezeigt, dass kalte Schneidstaubpartikel eine geringere Neigung zum Anhaften an der Unterseite U des Blechbands haben.

Es kann auch sein, dass die Belüftungseinrichtung 12, 13a, 13b, 13c, 14a, 14b weggelassen wird und stattdessen die Vorrichtung zum Schneiden von Blechplatinen lediglich mit einer stromabwärts des Spalts S angeordneten Kühlfalle versehen ist.

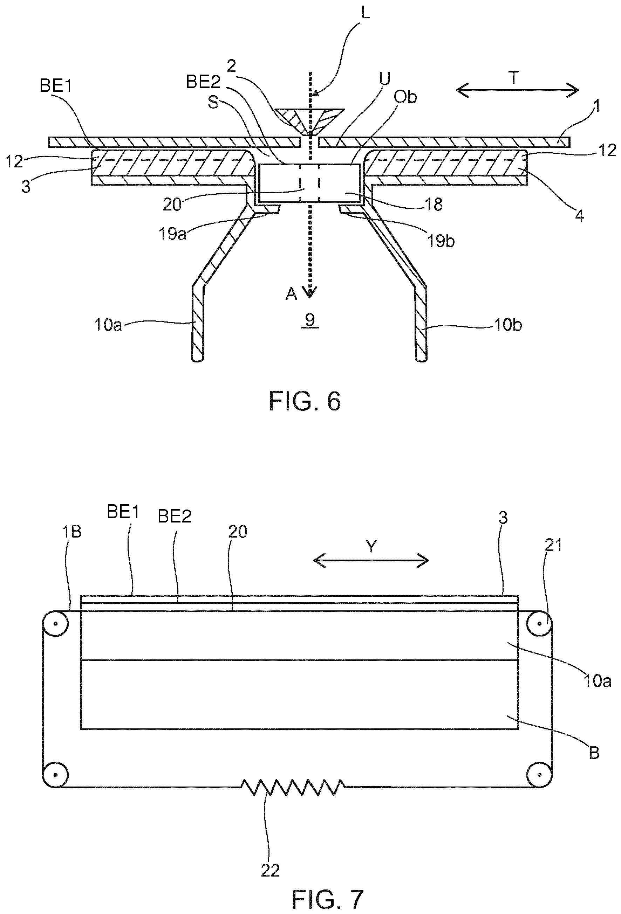

Die in Fig. 6 schematisch im Querschnitt gezeigte sechste Vorrichtung weist im Spalt S eine in y-Richtung hin und her bewegbare Blende 18 auf, welche beispielsweise auf sich von der ersten Wand 10a sowie der zweiten Wand 10b erstreckenden ersten 19a und zweiten Schultern 19b abgestützt ist. Eine der Schneiddüse 2 zugewandte Blendenoberseite Ob bildet eine zweite Bewegungsebene BE2. Das Blechband 1 liegt mit seiner Unterseite U auf der ersten Bewegungsebene BE1 auf, wohingegen die zweite Bewegungsebene BE2 beabstandet von der Unterseite U des Blechbands 1 sich befindet.

Die Blende 18 ist in y-Richtung im Wesentlichen geschlossen ausgebildet. Sie weist einen Durchbruch 20 zum Durchtritt des Laserstrahls L auf.

Fig. 7 zeigt eine Schnittansicht durch den Spalt S parallel zur y-Richtung. Die Blende 18 ist um weitere Umlenkrollen 21 geführt, von denen eine mit einer (hier nicht näher gezeigten) Antriebseinrichtung, z. B. einem Servomotor, angetrieben ist. Mit dem Bezugszeichen 22 ist eine Spanneinrichtung bezeichnet, mit welcher die Blende 18 gespannt gehalten wird. Im vorliegenden Ausführungsbeispiel ist den Wänden 10a, 10b (hier nicht sichtbar) ein weiterer Behälter B1 nachgeordnet, welcher beispielsweise rohrartig ausgebildet sein kann.

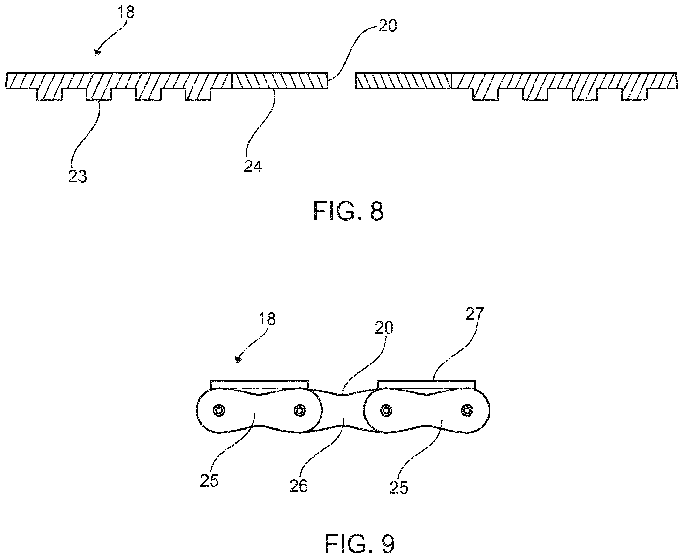

Fig. 8 zeigt eine schematische Querschnittsansicht durch ein Ausführungsbeispiel einer Blende 18. Die Blende 18 ist hier aus einem Zahnriemen 23 gebildet, welcher aus einem temperaturbeständigen Polymer hergestellt ist. Mit dem Bezugszeichen 24 ist ein in den Zahnriemen 23 eingesetzter Einsatz bezeichnet, welcher beispielsweise aus Metall hergestellt ist. Im Einsatz 24 ist der Durchbruch 20 vorgesehen.

Wie aus Fig. 9 ersichtlich ist, kann die Blende 18 auch aus nach Art einer Kette schwenkbeweglich miteinander verbundenen ersten Metallgliedern 25 gebildet sein, in welche ein zweites Metallglied 26 eingeschaltet ist. Die ersten Metallglieder 25 sind jeweils mit einer Abdeckung 27 versehen. Die Abdeckung 27 ist beim zweiten Metallglied 26 weggelassen, so dass hier der Durchbruch 20 zum Durchtritt des Laserstrahls L gebildet ist.

Die weitere Funktion der Vorrichtung ist Folgende:
Die im Spalt S aufgenommene Blende 18 wird zusammen mit den Stützleisten 3, 4 in Transportrichtung T mitlaufend mit der Schneiddüse 2 in Transportrichtung T hin und her bewegt. Abgesehen davon wird die Blende 18 in y-Richtung mitlaufend mit der Schneiddüse 2 hin und her bewegt, so dass der durch die Schneiddüse 2 austretende Laserstrahl L stets in Ausrichtung mit dem Durchbruch 20 ist. Zu diesem Zweck kann eine der weiteren Umlenkrollen 21, welche beispielsweise als Ritzel oder Zahnriemenscheibe ausgebildet sein kann, mit einer Antriebseinrichtung versehen sein. Bei der Antriebseinrichtung handelt es sich z. B. um einen Servo- oder Stellmotor, welcher mit einer Steuerung verbunden ist. Die Steuerung dient sowohl zur Steuerung der Laserschneidvorrichtung in y-Richtung als auch zur Steuerung der Blende 18 in y-Richtung, und zwar derart, dass der Laserstrahl L stets auf den Durchbruch 20 der Blende 18 gerichtet ist.

### Bezugszeichenliste

- 1: Blechband
- 2: Schneiddüse
- 3: erste Stützleiste
- 4: zweite Stützleiste
- 5: erster Bandförderer
- 6: zweiter Bandförderer
- 7: erste Umlenkrolle
- 8: zweite Umlenkrolle
- 9: Abführschacht
- 10a: erste Wand
- 10b: zweite Wand
- 11a: erste Stützfläche
- 11b: zweite Stützfläche
- 12: Belüftungskanal
- 13a, b: Abschnitt
- 13c: Verbindungskanal
- 14a: erster Belüftungsdurchbruch
- 14b: zweiter Belüftungsdurchbruch
- 15: Leitung
- 16: Gebläse
- 17: Schnitt
- 18: Blende
- 19a: erste Schulter
- 19b: zweite Schulter
- 20: Durchbruch
- 21: weitere Umlenkrolle
- 22: Spanneinrichtung
- 23: Zahnriemen
- 24: Einsatz
- 25: erstes Metallglied
- 26: zweites Metallglied
- 27: Abdeckung

- A: Abführrichtung
- B: Behälter
- BE1: erste Bewegungsebene
- BE2: zweite Bewegungsebene
- B1: weiterer Behälter
- L: Laserstrahl
- Lg1: erste Länge
- Lg2: zweite Länge
- O: Oberseite
- Ob: Blendenoberseite
- S: Spalt
- Ss: Schneidstaub
- T: Transportrichtung
- U: Unterseite

## Patentansprüche

1. Vorrichtung zum Schneiden von Blechplatinen aus einem Blechband (1), umfassend:
eine in einer Transportrichtung (T) des Blechbands (1) sowie in einer zur Transportrichtung senkrecht verlaufenden y-Richtung hin und her bewegbare Laserschneidvorrichtung (2),
ein erstes Förderband, dessen erstes Ende (7) mitlaufend mit der Laserschneidvorrichtung (2) in Transportrichtung (T) hin und her bewegbar ist,
ein zweites Förderband mit einem dem ersten Ende (7) gegenüberliegenden zweiten Ende (8), welches in Transportrichtung (T) hin und her bewegbar ist,
wobei das erste (7) und das zweite Ende (8) derart bewegt werden, dass ein von der Laserschneidvorrichtung erzeugter Laserstrahl (L) auf einen zwischen dem ersten (7) und dem zweiten Ende (8) gebildeten, sich in y-Richtung erstreckenden Spalt (S) gerichtet ist,
wobei im Spalt (S) eine in y-Richtung mitlaufend in Ausrichtung auf den Laserstrahl (L) hin und her bewegbare Blende (18) vorgesehen ist,
**dadurch gekennzeichnet,**
**dass** sich in eine von einer Unterseite (U) des Blechbands (1) wegweisende Abführrichtung (A) ein Staubabführschacht (9) erstreckt,
**dass** der Staubabführschacht (9) mit einer Belüftungseinrichtung zur Belüftung des Spalts (S) versehen ist, und
**dass** die Belüftungseinrichtung Belüftungsdurchbrüche (14a, 14b) umfasst, welche den Staubabführschacht (9) durchgreifen.

2. Vorrichtung nach Anspruch 1, wobei die Blende (18) aus schwenkbeweglich miteinander verbundenen Metallgliedern (25, 26) gebildet ist, von denen ein erstes Metallglied (25) einen Durchbruch (20) zum Durchtritt des Laserstrahls (L) aufweist und zweite Metallglieder (26) eine Abdeckung (27) aufweisen.

3. Vorrichtung nach einem der vorhergehenden Ansprüche, wobei die Blende (18) aus einem Zahnriemen (23) oder einem Edelstahlband gebildet ist, welche mit einem Durchbruch (20) zum Durchtritt des Laserstrahls (L) versehen sind.

4. Vorrichtung nach einem der vorhergehenden Ansprüche, wobei eine Antriebseinrichtung (21) vorgesehen ist, mit welcher die Blende (18) hin und her bewegbar ist.

5. Vorrichtung nach einem der vorhergehenden Ansprüche, wobei am ersten Ende (7) des ersten Förderbands ein erstes Stützmittel mit einer ersten Stützleiste (3) und am zweiten Ende (8) ein zweites Stützmittel mit einer der ersten Stützleiste (3) gegenüberliegenden zweiten Stützleiste (4) vorgesehen sind, so dass der Spalt (S) zwischen der ersten (3) und der zweiten Stützleiste (4) gebildet ist.

6. Vorrichtung nach einem der vorhergehenden Ansprüche, wobei eine der Blechplatine zugewandte Oberseite des ersten und/oder zweiten Förderbands eine erste Bewegungsebene (BE1) in Transportrichtung (T) bildet, welche oberhalb einer zweiten Bewegungsebene (BE2) der Blende (18) in y-Richtung angeordnet ist, welche durch eine der Laserschneidvorrichtung zugewandten Blendenoberseite (Ob) der Blende (18) gebildet ist.

7. Vorrichtung nach einem der vorhergehenden Ansprüche, wobei eine der Laserschneidvorrichtung zugewandte Stützfläche (11a, 11b) der Stützleisten (3, 4) eine erste Bewegungsebene (BE1) in Transportrichtung (T) bildet, welche oberhalb einer zweiten Bewegungsebene (BE2) der Blende (18) in y-Richtung angeordnet ist, welche durch eine der Laserschneidvorrichtung zugewandten Blendenoberseite (Ob) der Blende (18) gebildet ist.

8. Vorrichtung nach einem der Ansprüche 5 bis 7, wobei sich der Staubabführschacht (9) von zumindest einer der Stützleisten (3, 4) in eine von der Laserschneidvorrichtung (2) weg weisende Abführrichtung (A) erstreckt.

9. Vorrichtung nach einem der Ansprüche 5 bis 8, wobei die zumindest eine Stützleiste (3, 4) mit einer Belüftungseinrichtung (12, 13a, 13b, 13c, 14a, 14b) zur Belüftung des Spalts (S) versehen ist/sind.

10. Vorrichtung nach Anspruch 9, wobei die Belüftungseinrichtung (12, 13a, 13b, 13c, 14a, 14b) Belüftungskanäle (12, 13a, 13b, 13c) umfasst, welche in der Stützfläche (11a, 11b) der Stützleiste (3, 4) vorgesehen sind.

11. Vorrichtung nach Anspruch 10, wobei die Belüftungskanäle (12, 13a, 13b, 13c) sich über eine sich in Transportrichtung (T) erstreckende Länge (Lg1) der Stützfläche (11a, 11b) erstrecken.

12. Vorrichtung nach Anspruch 10 oder 11, wobei die Belüftungskanäle (12, 13a, 13b, 13c) parallel oder schräg zur Transportrichtung (T) verlaufen.

13. Vorrichtung nach einem der Ansprüche 9 bis 12, wobei die Belüftungseinrichtung (12, 13a, 13b, 13c, 14a, 14b) Belüftungsdurchbrüche (14a, 14b) umfasst, welche zumindest eine der Stützleisten (3, 4) durchgreifen.

14. Vorrichtung nach einem der vorhergehenden Ansprüche, wobei ein Gebläse (16) zum Zuführen von Luft zu den Belüftungskanälen (12, 13a, 13b, 13c) und/oder Belüftungsdurchbrüchen (14a, 14b) vorgesehen ist.

15. Vorrichtung nach einem der vorhergehenden Ansprüche, wobei der Staubabführschacht (9) einen sich in der Abführrichtung (A) erweiternden Querschnitt aufweist.

16. Vorrichtung nach einem der vorhergehenden Ansprüche, wobei die Stützleisten (3, 4) und/oder der Staubabführschacht (9) aus Kupfer oder einer im Wesentlichen Kupfer enthaltenden Legierung hergestellt ist/sind.

17. Vorrichtung nach einem der vorhergehenden Ansprüche, wobei der Staubabführschacht (9) mit einem Behälter (B) zum Auffangen von Schneidstaub (Ss) verbunden ist.

18. Vorrichtung nach einem der Ansprüche 5 bis 17, wobei der Staubabführschacht (9) lediglich an einer der beiden Stützleisten (3, 4) angebracht ist.

19. Vorrichtung nach einem der Ansprüche 5 bis 18, wobei der Staubabführschacht (9) durch zwei sich in Abführrichtung (A) ersteckende Wände (10a, 10b) gebildet ist, wobei zumindest eine der Wände (10a, 10b) an einer der Stützleisten (3, 4) angebracht ist.

20. Vorrichtung nach einem der vorhergehenden Ansprüche, wobei im Randbereich des Staubabführschachts (9) mit dem Gebläse (16) verbundene Durchbrüche (14a, 14b) zur Ausbildung eines Luftschwerts vorgesehen sind.

## Claims

1. A device for cutting sheet metal plates out of a sheet metal strip (1), comprising:
a laser cutting device (2) that can move back and forth in a transport direction (T) of the sheet metal strip (1) as well as in a y-direction running perpendicular to the transport direction,
a first conveyor belt whose first end (7) can be moved back and forth together with the laser cutting device (2) in the transport direction (T),
a second conveyor belt having a second end (8), which is opposite the first end (7) and which can be moved back and forth in the transport direction (T),
wherein the first (7) and the second end (8) are moved in such a way that a laser beam (L) generated by the laser cutting device is directed towards a gap (S) formed between the first (7) and the second end (8) and extending in the y-direction,
wherein a screen (18) movable back and forth in the y-direction concurrently in alignment with the laser beam (L) is provided in the gap (S),
**characterized in that** a dust discharge shaft (9) extends in a discharge direction (A) pointing away from an underside (U) of the sheet metal strip (1),
the dust discharge shaft (9) is provided with a ventilation device for ventilating the gap (S), and
the ventilation device comprises ventilation apertures (14a, 14b), which penetrate the dust discharge shaft (9).

2. The device according to claim 1, wherein the screen (18) is formed from metal members (25, 26) connected pivotably to one another, of which a first metal member (25) has an aperture (20) for the passage of the laser beam (L) and second metal members (26) have a cover (27).

3. The device according to any one of the preceding claims, wherein the screen (18) is formed from a toothed belt (23) or a stainless steel belt, which are provided with an aperture (20) for the passage of the laser beam (L).

4. The device according to any one of the preceding claims, wherein a drive device (21) is provided, by means of which the screen (18) can be moved back and forth.

5. The device according to any one of the preceding claims, wherein a first support means having a first support strip (3) is provided at the first end (7) of the first conveyor belt and a second support means having a second support strip (4) opposite the first support strip (3) is provided at the second end (8), so that the gap (S) is formed between the first (3) and the second support strip (4).

6. The device according to any one of the preceding claims, wherein an upper side of the first and/or second conveyor belt facing the sheet metal plate forms a first movement plane (BE1) in the transport direction (T) which is arranged above a second movement plane (BE2) of the screen (18) in the y-direction, which second movement plane is formed by a screen upper side (Ob) of the screen (18) facing the laser cutting device.

7. The device according to any one of the preceding claims, wherein a support face (11a, 11b) of the support strips (3, 4) facing the laser cutting device forms a first movement plane (BE1) in the transport direction (T) which is arranged above a second movement plane (BE2) of the screen (18) in the y-direction, which second movement plane is formed by a screen upper side (Ob) of the screen (18) facing the laser cutting device.

8. The device according to any one of claims 5 to 7, wherein the dust discharge shaft (9) extends from at least one of the support strips (3, 4) in a discharge direction (A) pointing away from the laser cutting device (2).

9. The device according to any one of claims 5 to 8, wherein the at least one support strip (3, 4) is/are provided with a ventilation device (12, 13a, 13b, 13c, 14a, 14b) for ventilating the gap (S).

10. The device according to claim 9, wherein the ventilation device (12, 13a, 13b, 13c, 14a, 14b) comprises ventilation channels (12, 13a, 13b, 13c), which are provided in the support face (11a, 11b) of the support strip (3, 4).

11. The device according to claim 10, wherein the ventilation channels (12, 13a, 13b, 13c) extend over a length (Lg1) of the support face (11a, 11b) extending in the transport direction (T).

12. The device according to claim 10 or 11, wherein the ventilation channels (12, 13a, 13b, 13c) run parallel or at an incline to the transport direction (T).

13. The device according to any one of claims 9 to 12, wherein the ventilation device (12, 13a, 13b, 13c, 14a, 14b) comprises ventilation apertures (14a, 14b) which penetrate at least one of the support strips (3, 4).

14. The device according to any one of the preceding claims, wherein a fan (16) is provided for supplying air to the ventilation channels (12, 13a, 13b, 13c) and/or ventilation apertures (14a, 14b).

15. The device according to any one of the preceding claims, wherein the dust discharge shaft (9) has a cross-section that widens in the discharge direction (A).

16. The device according to any one of the preceding claims, wherein the support strips (3, 4) and/or the dust discharge shaft (9) are/is made of copper or an alloy containing substantially copper.

17. The device according to any one of the preceding claims, wherein the dust discharge shaft (9) is connected to a container (B) for collecting cutting dust (Ss).

18. The device according to any one of claims 5 to 17, wherein the dust discharge shaft (9) is connected only to one of the two support strips (3, 4).

19. The device according to any one of claims 5 to 18, wherein the dust discharge shaft (9) is formed by two walls (10a, 10b) extending in the discharge direction (A), wherein at least one of the walls (10a, 10b) is attached to one of the support strips (3, 4).

20. The device according to any one of the preceding claims, wherein apertures (14a, 14b) connected to the fan (16) are provided in the edge region of the dust discharge shaft (9) in order to form an air sword.

## Revendications

1. Dispositif de coupe de flans de tôle dans une bande de tôle (1) comprenant :
un dispositif de coupe au laser (2) animé d'un mouvement de va-et-vient dans un sens de transport (T) de la bande de tôle (1) ainsi que dans un sens y s'étendant perpendiculairement au sens de transport,
une première bande de transport dont la première extrémité (7) est animée d'un mouvement de va-et-vient dans le sens de transport (T) en circulant en même temps que le dispositif de coupe au laser (2),
une deuxième bande de transport comprenant une deuxième extrémité (8) qui est opposée à la première extrémité (7) et qui est animée d'un mouvement de va-et-vient dans le sens de transport (T),
en ce que la première (7) et la deuxième extrémité (8) sont déplacées de telle sorte qu'un faisceau laser (L) généré par le dispositif de coupe au laser est orienté vers un interstice (S) formé entre la première (7) et la deuxième extrémité (8) et s'étendant dans le sens y,
en ce qu'un capot (18) animé d'un mouvement de va-et-vient dans le sens y orienté sur le faisceau laser (L) est prévu dans l'interstice (S),
**caractérisé**
**en ce qu'**un puits d'évacuation de la poussière (9) s'étend dans un sens d'évacuation (A) s'éloignant d'une face inférieure (U) de la bande de tôle (1),
**en ce que** le puits d'évacuation de la poussière (9) est muni d'un dispositif de ventilation servant à ventiler l'interstice (S), et
**en ce que** le dispositif de ventilation comporte des conduits de ventilation (14a, 14b) qui traversent le puits d'évacuation de la poussière (9).

2. Dispositif selon la revendication 1, en ce que le capot (18) est réalisé à partir de maillons métalliques (25, 26) reliés entre eux de manière pivotante, dont un premier maillon métallique (25) comporte un orifice (20) pour le passage du faisceau laser (L) et les seconds maillons métalliques (26) un carter (27).

3. Dispositif selon l'une des revendications précédentes, en ce que le capot (18) est réalisé à partir d'une courroie dentée (23) ou d'une bande en acier inoxydable qui sont dotées d'un orifice (20) pour le passage du faisceau laser (L).

4. Dispositif selon l'une des revendications précédentes, en ce qu'un dispositif d'entraînement (21) est prévu avec lequel le capot (18) peut être déplacé dans un mouvement de va-et-vient.

5. Dispositif selon l'une des revendications précédentes, en ce qu'un premier moyen de support muni d'une première baguette de support (3) est prévu à la première extrémité (7) de la première bande de transport et un second moyen de support doté d'une seconde baguette de support (4) opposée à la première baguette de support (3) est prévu à la deuxième extrémité (8) de sorte que l'interstice (S) soit formé entre la première (3) et la seconde baguette de support (4).

6. Dispositif selon l'une des revendications précédentes, en ce qu'une face supérieure orientée vers le flan de tôle de la première et/ou de la deuxième bande de transport forme un premier plan de déplacement (BE1) dans le sens de transport (T) qui est disposé dans le sens y au-dessus d'un deuxième plan de déplacement (BE2) du capot (18) qui est formé par une face supérieure (Ob) du capot (18) orientée vers le dispositif de coupe au laser.

7. Dispositif selon l'une des revendications précédentes, en ce qu'une surface d'appui (11a, 11b) des baguettes de support (3, 4) qui est orientée vers le dispositif de coupe au laser forme un premier plan de déplacement (BE1) dans le sens de transport (T) qui est disposé dans le sens y au-dessus d'un deuxième plan de déplacement (BE2) du capot (18) qui est formé par une face supérieure (Ob) du capot (18), la face supérieure étant orientée vers le dispositif de coupe au laser.

8. Dispositif selon l'une des revendications 5 à 7, en ce que le puits d'évacuation de la poussière (9) s'étend au moins à partir d'une des baguettes de support (3, 4) dans un sens d'évacuation (A) s'éloignant du dispositif de coupe au laser (2).

9. Dispositif selon l'une des revendications 5 à 8, en ce qu'au moins une des baguettes de support (3, 4) est/sont munie(s) d'un dispositif de ventilation (12, 13a, 13b, 13c, 14a, 14b) servant à ventiler l'interstice (S).

10. Dispositif selon la revendication 9, en ce que le dispositif de ventilation (12, 13a, 13b, 13c, 14a, 14b) comporte des canaux de ventilation (12, 13a, 13b, 13c) qui sont ménagés dans la surface d'appui (11a, 11b) de la baguette de support (3, 4).

11. Dispositif selon la revendication 10, en ce que les canaux de ventilation (12, 13a, 13b, 13c) s'étendent sur une longueur (Lg1) s'étendant dans le sens de transport (T) de la surface d'appui (11a, 11b).

12. Dispositif selon la revendication 10 ou 11, en ce que les canaux de ventilation (12, 13a, 13b, 13c) sont parallèles ou inclinés par rapport au sens de transport (T).

13. Dispositif selon l'une des revendications 9 à 12, en ce que le dispositif de ventilation (12, 13a, 13b, 13c, 14a, 14b) comporte des conduits de ventilation (14a, 14b) qui traversent au moins une des baguettes de support (3, 4).

14. Dispositif selon l'une des revendications précédentes, en ce qu'une soufflante (16) servant à alimenter en air les canaux de ventilation (12, 13a, 13b, 13c) et/ou les conduits de ventilation (14a, 14b) est prévue.

15. Dispositif selon l'une des revendications précédentes, en ce que le puits d'évacuation de la poussière (9) présente une section transversale s'élargissant dans le sens d'évacuation (A).

16. Dispositif selon l'une des revendications précédentes, en ce que les baguettes de support (3, 4) et/ou le puits d'évacuation de la poussière (9) est/sont réalisé(s) en cuivre ou en un alliage contenant principalement du cuivre.

17. Dispositif selon l'une des revendications précédentes, en ce que le puits d'évacuation de la poussière (9) est relié à un collecteur (B) servant à capter la poussière générée par la découpe (Ss).

18. Dispositif selon l'une des revendications 5 à 17, en ce que le puits d'évacuation de la poussière (9) est monté uniquement sur l'une des deux baguettes de support (3, 4).

19. Dispositif selon l'une des revendications 5 à 18, en ce que le puits d'évacuation de la poussière (9) est formé par deux parois (10a, 10b) s'étendant dans le sens d'évacuation (A), en ce qu'au moins l'une des parois (10a, 10b) est montée sur l'une des baguettes de support (3, 4).

20. Dispositif selon l'une des revendications précédentes, en ce que des conduits (14a, 14b) reliés à la soufflante (16) dans la zone périphérique du puits d'évacuation de la poussière (9) sont prévus pour la formation d'une lame d'air.
